Europäisches Patentamt

European Patent Office

Office européen des brevets

(11) Veröffentlichungsnummer: **0 445 510 A2**

## EUROPÄISCHE PATENTANMELDUNG

(21) Anmeldenummer: **91100799.5**

(22) Anmeldetag: **23.01.91**

(51) Int. Cl.⁵: **F24D 3/18**

(30) Priorität: **03.03.90 DE 4006742**

(43) Veröffentlichungstag der Anmeldung:
**11.09.91 Patentblatt 91/37**

(84) Benannte Vertragsstaaten:
**AT FR GB IT NL SE**

(71) Anmelder: **Messerschmitt-Bölkow-Blohm**
**Gesellschaft mit beschränkter Haftung**
**Robert-Koch-Strasse**
**W-8012 Ottobrunn(DE)**

(72) Erfinder: **Brachthäuser, Karl-Heinz**
**Fuchsweg 36**
**W-8011 Baldham(DE)**
Erfinder: **Merges, Veit**
**Theodor-Heuss-Strasse 8**
**W-8011 Putzbrunn(DE)**

(54) Heizungs- und Stromerzeugungsanlage.

(57) Heizungs- und Stromerzeugungsanlage mit einem Heizkessel zur Gebäudebeheizung bzw. zur Brauchwassererwärmung, mit einem Brenner für den Heizkessel, einem von demselben Brenner beheizbaren Stirlingmotor, einem Generator sowie einer Wärmepumpe. Der Stirlingmotor ist ein Freikolben-Stirlingmotor, dessen Kühler mit einem Brauchwasserbehälter bzw. mit einem Luftkanal wärmeübertragend verbunden werden kann.

Der Generator ist ein Lineargenerator und direkt mit dem Freikolben-Stirlingmotor gekoppelt.

Die Wärmepumpe besitzt einen elektrischen, u.a. auf Netzbetrieb schaltbaren Antriebsmotor.

Der Lineargenerator kann über eine Regelung mit dem Antriebsmotor der Wärmepumpe, mit dem öffentlichen Stromnetz sowie mit weiteren Verbrauchern elektrisch verbunden werden.

FIG. 1

Die Erfindung betrifft eine Heizungs- und Stromerzeugungsanlage, welche in Brennstoffen gespeicherte Primärenergie und Umgebungswärme in elektrische Energie und Nutzwärme umwandeln kann, gemäß dem Oberbegriff des Patentanspruches 1.

Aus der DE-OS 35 16 962 ist eine öl- und gasbefeuerte Warmwasser-Hausheizungsanlage bekannt, welche einen Heizkessel mit Wasserdurchlauf, einen Brenner für den Heizkessel, einen ebenfalls von dem Brenner beheizbaren Stirlingmotor und eine von letzterem angetriebene Stirlingwärmepumpe umfaßt. Die Kaltseite des Stirlingmotors (Kühler) und die Warmseite der Stirlingwärmepumpe sind dem Heizkessel zugeordnet.

Durch die Kombination von Brenner, Stirlingmotor und -wärmepumpe ist es möglich, die im Brennstoff (Öl oder Gas) gespeicherte Primärenergie und Umgebungsenergie für Heizzwecke zu nutzen mit einem Wärmepumpenantrieb, welcher keinen elektrischen Strom benötigt. Dabei wird die Kaltseite der Wärmepumpe mit Umgebungsluft bzw. mit Abluft aus dem Haus beaufschlagt, welche anschließend gekühlt ins Freie abgegeben wird.

Falls ein Betrieb der Wärmepumpe aus Temperaturgründen nicht mehr möglich bzw. sinnvoll ist, wird der Heizkessel ausschließlich mit der Brennerabwärme betrieben, wobei der Erhitzer des Stirlingmotors durch einen Überhitzungsschutz (z.B. schwenkbare Platte) gegenüber der Brennerflamme abgeschirmt wird.

Die beschriebene Hausheizungsanlage zeichnet sich durch einen guten Wirkungsgrad, eine kompakte Bauweise sowie einen gemäßigten finanziellen Aufwand bei Anschaffung, Installation und Betrieb aus.

Unter dem Begriff "Kraft-Wärme-Koppelung" sind Anlagen bekannt, welche z.B. aus einem wassergekühlten Otto- oder Dieselmotor und einem von diesem angetriebenen Generator bestehen. Die Abwärme des Motors (Kühlwasser, Abgase) steht für Heizzwecke zur Verfügung, während der Generator Strom für hauseigene Verbraucher bzw. für die Einspeisung in das öffentliche Stromnetz liefert. Mit dem erzeugten Strom läßt sich beispielsweise auch eine elektrische Wärmepumpe betreiben,so daß auch hier die Nutzung von Umgebungswärme möglich ist.

Gravierende Nachteile einer solchen Anlage sind die hohen Anschaffungs- und Betriebskosten für die Motor-/Generator-Einheit sowie ihre begrenzte Lebensdauer, bedingt durch die Eigenschaften des Verbrennungsmotors.

Hinzu kommen gravierende Probleme mit Lärm und Schwingungen.

Gegenüber dem aufgezeigten Stand der Technik besteht die Aufgabe der Erfindung darin, eine Heizungs- und Stromerzeugungsanlage zur Umwandlung von Primärenergie und Umgebungswärme in elektrische Energie und Nutzwärme zu schaffen, welche sich durch einen guten Wirkungsgrad, eine kompakte Bauweise mit vertretbarem technischen Aufwand, eine hohe Lebensdauer, eine unproblematische Betriebsweise bei hoher Flexibilität zur Anpassung an wechselnde Betriebsbedingungen und somit letztlich durch ein besonders günstiges Nutzen-/Kosten-Verhältnis auszeichnet.

Diese Aufgabe wird durch die im Anspruch 1 gekennzeichnete Kombination der - einzeln für sich weitgehend bekannten - Merkmale a) bis e) gelöst.

Gemäß dem Oberbegriff des Anspruches 1 sind an Geräten ein Heizkessel mit Brenner, ein Stirlingmotor, ein Generator und eine Wärmepumpe vorhanden.

Erfindungsgemäß ist der Stirlingmotor als Freikolben-Stirlingmotor ausgeführt, d.h., er benötigt keinen aufwendigen Kurbelbetrieb und ist deshalb besonders einfach, preiswert und langlebig. Die Kühlerabwärme des Stirlingmotors wird als Heizwärme einem Wasser- und/oder Luftstrom zugeführt, zu welchem Zweck der Kühler wärmeübertragend mit entsprechenden Behältern, Leitungen bzw. Kanälen verbunden werden kann.

Der Generator ist als Lineargenerator ausgeführt und kann somit direkt, d.h. von Kolbenstange zu Kolbenstange, mit dem Arbeitskolben des Freikolben-Stirlingmotors gekoppelt werden. Hierdurch ergeben sich eine extrem kompakte Bauweise sowie ein besonders guter Wirkungsgrad der Motor-/Generator-Einheit.

Die Wärmepumpe weist einen elektrischen Antriebsmotor auf und kann - beispielsweise in Zeitabschnitten mit niedrigem Strompreis (z.B. Nachtstrom) - auf Netzbetrieb geschaltet werden.

Der Lineargenerator kann über eine entsprechende Regelung mit dem Antriebsmotor der Wärmepumpe, mit dem öffentlichen Stromnetz sowie mit weiteren Verbrauchern elektrisch verbunden werden. Natürlich kann die Wärmepumpe auch gleichzeitig mit anderen Verbrauchern versorgt werden. Ebenso ist eine Einspeisung in das öffentliche Stromnetz bei gleichzeitiger Verbraucherversorgng möglich. Letztlich ist dies ein Abgleichvorgang zwischen dem Angebot und dem Bedarf an elektrischer Leistung.

Die Unteransprüche 2 bis 5 enthalten bevorzugte Ausgestaltungen der Heizungs- und Stromerzeugungsanlage nach Anspruch 1.

Die Erfindung wird anschließend anhand der Zeichnung noch näher erläutert. Es zeigen

Fig. 1    ein    Ausführungsbeispiel    einer    Heizungs- und Stromerzeugungsanlage in schematischer Darstellung,

Fig. 2    ein Schaltschema mit mehreren Möglichkeiten für den Energiefluß.

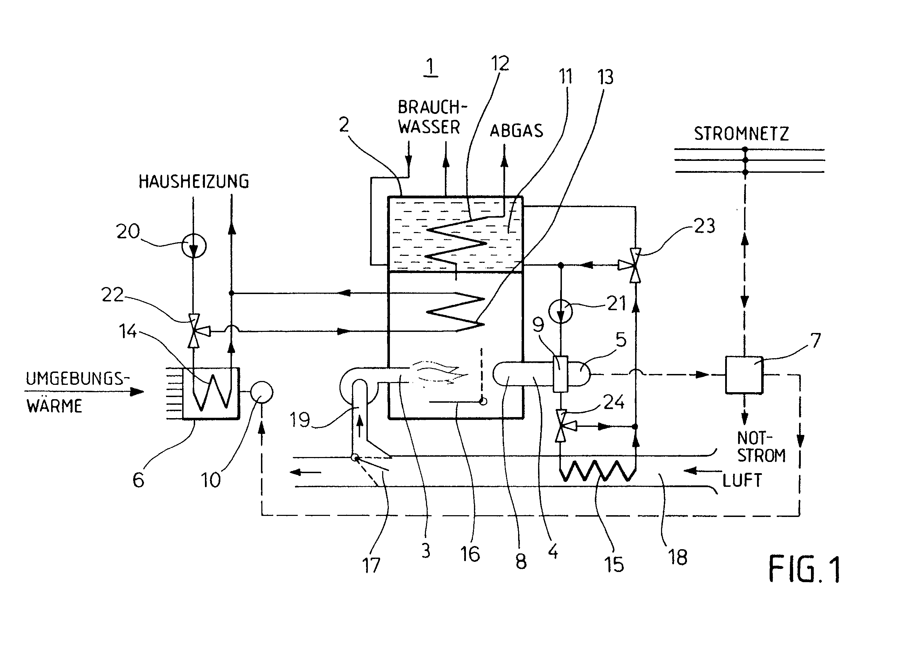

Die Heizungs- und Stromerzeugungsanlage 1 nach Fig. 1 verwendet als zentrale Einheit - wie jede Öl- oder gasbefeuerte Hausheizung - einen Heizkessel 2 mit Brenner 3. Den oberen Teil des Heizkessels 2 bildet ein Brauchwasserbehälter 11 mit - wenigstens - einem Zu- und Ablauf für das Wasser. Im Brauchwasserbehälter 11 ist ein Wärmetauscher 12 angeordnet, welcher von den heißen Abgasen des Brenners 3 durchströmt wird und beispielsweise als Rohrbündel, Rohrwendel oder Rohrschlange ausgeführt ist. Auch durch den Boden des Brauchwasserbehälters 11 wird ein nennenswerter Anteil des Wärmestromes übertragen.

Für das Wärmeträgerfluid (Wasser bzw. Wasserdampf) der Hausheizung ist zwischen Brenner 3 und Brauchwasserbehälter 11 im Heißgasbereich ein Wärmetauscher 13 vorgesehen.

Dem Brenner 3 gegenüberliegend ist ein Freikolben-Stirlingmotor 4 so in den Heizkessel 2 integriert, daß sein Erhitzer 8 in den Heißgasbereich des Heizkessels 2 hineinragt. Auf diese Weise ist eine direkte Beheizung des Freikolben-Stirlingmotors 4 durch den Brenner 3 möglich. Um bei laufendem Brenner 3 den Freikolben-Stirlingmotor 4 stillsetzen zu können, ist eine schwenkbare Klappe 16 eingebaut, mit welcher der Erhitzer 8 gegenüber den Heißgasen des Brenners 3 abgeschirmt werden kann (gestrichelte Klappenstellung). Anstelle der Klappe 16 können natürlich auch andere Vorrichtungen wie z.B. eine Jalousie, ein Schieber o.ä. zur Anwendung kommen.

Die im Kühler 9 des Freikolben-Stirlingmotors 4 anfallende Abwärme wird ebenfalls für Heizzwecke verwendet. Mit Hilfe der Pumpe 21 und der Ventile 23 und 24 lassen sich mehrere Kreisläufe zur Erwärmung von Luft und/oder Brauchwasser realisieren. Als Wärmeträgerfluid wird Wasser aus dem Brauchwasserbehälter 11 verwendet. Um ausschließlich das Brauchwasser zu erwärmen, wird folgender Strömungsweg in Fig. 1 gewählt: Unten rechts aus dem Brauchwasserbehälter 11 heraus, vertikal nach unten durch die Pumpe 21 und durch den Kühler 9 zum Ventil 24, vom Ventil 24 horizontal nach rechts, dann vertikal nach oben durch das Ventil 23 und zurück in den Brauchwasserbehälter 11 (oben rechts).

Um ausschließlich die durch den Kanal 18 strömende Luft zu erwärmen, wird - unter Umgehung des Brauchwasserbehälters 11 - folgender Strömungsweg gewählt:
Von der Pumpe 21 vertikal nach unten durch den Kühler 9 und durch das Ventil 24 zum Wärmetauscher 15, nach Durchströmen des Wärmetauschers 15 vertikal nach oben zum Ventil 23, vom Ventil 23 horizontal nach links und - vor Eintritt in den Brauchwasserbehälter 11 - vertikal nach unten zur Pumpe 21.

Durch entsprechende Schaltung der Ventile 23 und 24 ist es auch möglich, den Brauchwasserbehälter 11 und den Wärmetauscher 15 in einem Kreislauf zu durchströmen, d.h. Brauchwasser und Luft zu erwärmen.

Die Ventile 23 und 24 können gegebenenfalls auch so eingestellt werden, daß der in das jeweilige Ventil eintretende Strom des Wärmeträgerfluids in zwei variable Teilströme aufgespalten wird, wodurch sich die gewünschten Wärmeströme und Temperaturen noch feinfühliger regulieren lassen.

Die im Kanal 18 erwärmte Umgebungsluft kann beispielsweise zur Beheizung eines Industriegebäudes, zur Trocknung von Biomasse oder zum Betrieb einer Absorptionskälteanlage verwendet werden. Weiterhin kann auf diese Weise der Brenner 3 mit vorgewärmter Ansaugluft versorgt werden, wodurch sich Brennstoff einsparen läßt. Zu diesem Zweck zweigt vom Luftkanal 18 ein weiterer Luftkanal 19 ab, welcher zur Ansaugseite des Brennergebläses führt. Mittels der Klappe 17 läßt sich jeder der beiden Luftkanäle vollständig verschließen (gestrichelte Klappenstellungen), über Zwischenstellungen - wie der durchgezogen dargestellten - lassen sich beide Luftkanäle 18 und 19 mit variablen Teilströmen des erwärmten Luftstromes versorgen.

Die dargestellte Heizungs- und Stromerzeugungsanlage 1 eignet sich beispielsweise sehr gut zur Versorgung eines Wohnhauses mit einem zugeordneten Industriegebäude, wie z.B. einer Werkstätte.

Während das Industriegebäude mit Warmluft aus dem Kanal 18 beheizt wird, ist für die Beheizung des Wohnhauses der in Fig. 1 links dargestellte Anlagenteil zuständig, welcher mit Wasser bzw. Wasserdampf als Wärmeträgerfluid arbeitet.

Zur Hausheizung gehören u.a. die Pumpe 20, das Ventil 22, die Wärmetauscher 13 und 14 sowie die Wärmepumpe 6 mit Antriebsmotor 10. Nicht dargestellt sind beispielsweise die Heizkörper, welche die Nutzwärme auf die einzelnen Räume verteilen.

Die Wärmepumpe 6 ermöglicht die direkte Entnahme von Wärme aus der Umgebung, z.B. aus der Umgebungsluft, aus dem Boden, aus dem Grundwasser, aus Flußwasser, aus einem Abwasserspeicher etc., sowie die Anhebung dieser Wärme auf ein nutzbares (höheres) Temperaturniveau. Mit Hilfe des Ventiles 22 kann die Wärmepumpe 6 teilweise oder vollständig umgangen, und die erforderliche Wärme dem Brenner, d.h. dem Brennstoff, entnommen werden. Dies ist insbesondere dann sinnvoll, wenn das von der Wärmepumpe 6 bereitgestellte Temperaturniveau nicht ausreicht, oder aufgrund der Umgebungsbedingungen (Frost etc.) ein Betrieb der Wärmepumpe 6 nicht möglich bzw. sinnvoll ist.

Abgesehen von den vorausgehend erörterten, diversen Heizfunktionen erfüllt die Anlage 1 ja auch die Funktion der Stromerzeugung bzw. -versorgung, welche anschließend erörtert werden soll.

Der Freikolben-Stirlingmotor 4 gibt seine mechanische Leistung an einen Lineargenerator 5 ab, welcher Wechselstrom, vorzugsweise mit der üblichen Netzfrequenz (in Deutschand 50 Hz), erzeugt. Die Verteilung dieser elektrischen Energie wird von der Regelung 7 übernommen, deren Struktur nicht Gegenstand der Erfindung ist und deshalb auch nicht näher erläutert werden soll.

Der erzeugte Wechselstrom kann zum Antrieb der Wärmepumpe 6 verwendet werden, wofür diese - erfindungsgemäß - mit einem elektrischen Antriebsmotor 10 ausgestattet ist.

Der erzeugte Wechselstrom kann weiterhin leistungsmäßig angepaßten Verbrauchern zugeführt werden, welche dem oder den Gebäuden zugeordnet sind. Beispiele hierfür sind die Elemente einer Notstromanlage (Beleuchtung etc.), Kühlgeräte, Klimaanlagen, Datenanlagen usw.. Auch die Verbraucher der Heizungs- und Stromerzeugungsanlage 1 selbst, wie z.B. die Pumpen, Ventile, das Brennergebläse etc., können versorgt werden, so daß das Stichwort "Notstrom" in Fig. 1 nur als Beispiel für alle denkbaren Verbraucher zu verstehen ist.

Eine dritte Möglichkeit zur Nutzung des erzeugten Wechselstromes ist die Einspeisung in das öffentliche Stromnetz.

Alle drei Nutzungsarten (Wärmepumpe, Verbraucher, Stromnetz) können einzeln oder in Kombination zur Anwendung kommen.

Um einen Betrieb der Wärmepumpe 6 auch bei stillgesetztem Freikolben-Stirlingmotor4 zu ermöglichen, kann der Antriebsmotor 10 über die Regelung 7 auch aus dem öffentlichen Stromnetz gespeist werden, was insbesondere in Zeiten niedriger Strompreise (z.B. Nachstrom) erwägenswert ist.

Die verschiedenen Wege und Richtungen des elektrischen Energieflusses sind in Fig. 1 durch gestrichelte Linien mit entsprechenden Pfeilen wiedergegeben.

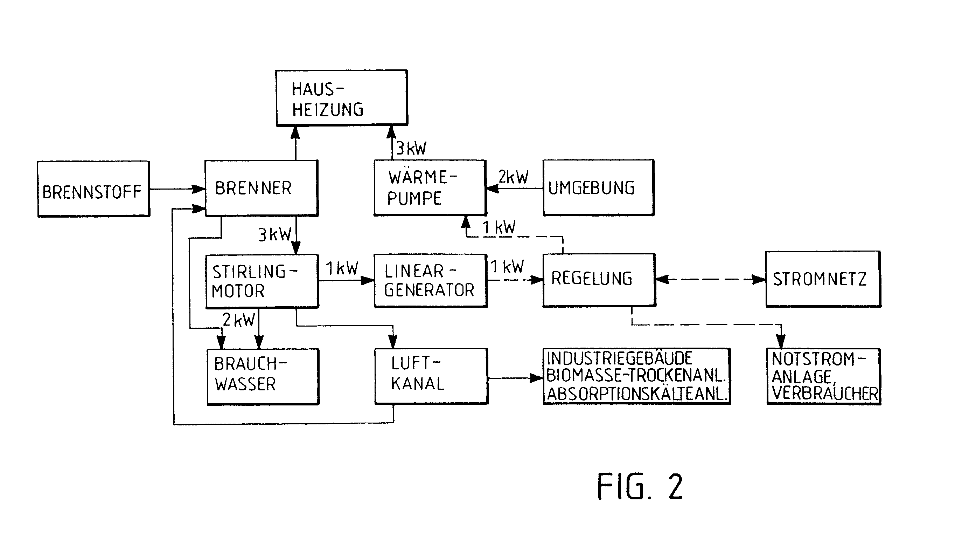

Das Schaltschema nach Fig. 2 gibt alle Möglichkeiten des Energieflusses, welche die gegenständliche Anordnung nach Fig. 1 bietet, in abstrahierter Form wieder. Hierbei sind Wärmeströme mit durchgezogenen Linien, elektrische Energieströme mit gestrichelten Linien dargestellt.

Das wiedergegebene Energiesystem beinhaltet drei unabhängige Energiequellen, nämlich den Brennstoff (vorzugsweise Öl oder Gas), die Umgebung und das Stromnetz.

Die im Brennstoff gespeicherte Wärmeenergie wird vom Brenner zumindest weitgehend freigesetzt und anschließend für verschiedene Zwecke genutzt.

In jedem Fall wird ein Teil der Wärme an das Brauchwasser abgegeben, welches nur durch gut wärmeleitende, metallische Wände von den Heißgasen getrennt ist. Ein weiterer Teil der Bennerwärme kann zur Hausheizung verwendet werden und zwar durch Zuschalten des entsprechenden Strömungskreises mit Wärmetauscher im Brennerbereich.

Schließlich kann die Brennerwärme auch großteils zum Antrieb des Stirlingmotors benutzt werden, welcher seinerseits den Lineargenerator antreibt.

Die Abwärme des Stirlingsmotors wird dem Brauchwasser und/oder einem Luftkanal zugeführt. Die dem Luftkanal zugeleitete Wärme kann beispielsweise einem Industriegebäude, einer Biomasse-Trockenanlage oder einer Absorptionskälteanlage zugeführt werden. Sie kann aber auch zur Vorwärmung der Ansaugluft des Brenners benutzt werden, wodurch ein gewisser Wärmekreislauf (Brenner → Stirlingmotor → Luftkanal → Brenner) entsteht.

Die Wirkungsgradverhältnisse beim Stirlingmotor sind etwa so, daß bei einer Wärmezufuhr von 3 kW die mechanische Leistung ca. 1 kW, die Abwärme ca. 2 kW beträgt. Die Angabe "2 kW" an der vertikalen gepfeilten Linie vom "Stirlingmotor" zum "Brauchwasser" gilt somit nur für den Fall, daß die gesamte Abwärme des Stirlingmotors an das Brauchwasser geht. Wie bereits erläutert, kann die Abwärme auch ganz oder teilweise an den Luftkanal abgegeben werden.

Der Lineargenerator arbeitet mit einem Wirkungsgrad nahe 100 %, so daß er bei einer mechanischen Leistungsaufnahme von 1 kW auch ca. 1 kW an elektrischer Leistung an die Regelung weitergibt. Je nach Betriebsweise leitet die Regelung die elektrische Leistung an die Wärmepumpe, das Stromnetz bzw. andere Verbraucher wie z.B. die Notstromanlage weiter.

Die Angabe "1 kW" an der abgewinkelten, gestrichelten und mit Pfeil versehenen Linie von der "Regelung" zur "Wärmepumpe" gilt somit für den Fall, daß die gesamte elektrische Leistung an die Wärmepumpe fließt. Der Wert "1 kW" ist nur ein willkürliches Beispiel, in Wirklichkeit kann die Leistung auch niedriger, vorzugsweise aber auch wesentlich höher sein.

Bei der Wärmepumpe sind die Verhältnisse etwa so, daß mit einer zugeführten Leistung von 1 kW ca. 2 kW an Wärmeleistung aus der Umgebung aufgenommen werden können. Die Leistungssumme vom 3 kW wird dann an die Hausheizung weitergegeben. Der Wirkungsgrad des Antriebsmotors der Wärmepumpe wird dabei mit ca. 100 % veranschlagt.

Somit ist es mit der erfindungsgemäßen Anlage möglich, mit einer vom Brenner an den Stirlingmotor abgegebenen Heizleistung von 3 kW eine Gesamtheizleistung von 2 + 3 = 5 kW (Brauchwasser + Hausheizung) zu erzielen.

Wie bereits erwähnt, kann die Wärmepumpe ihren elektrischen Strom über die Regelung auch aus dem öffentlichen Stromnetz beziehen. Deshalb ist an der gestrichelten Linie zwischen "Stromnetz" und "Regelung" auch ein Pfeil nach links vorhanden.

Es versteht sich, daß die erfindungsgemäße Anlage bei stillgelegtem Stirlingmotor keinen Strom erzeugen, bei stillgesetzter Wärmepumpe keine Wärme aus der Umgebung entnehmen kann. Die Hausheizung und die Brauchwassererwärmung mit Hilfe des Brenners sind jedoch jederzeit sichergestellt.

**Patentansprüche**

1. Heizungs- und Stromerzeugungsanlage, welche in Brennstoffen gespeicherte Primärenergie und Umgebungswärme in elektrische Energie und Nutzwärme umwandeln kann, mit - jeweils - mindestens einem Heizkessel zur Gebäudebeheizung und/oder zur Brauchwassererwärmung, einem Brenner für den Heizkessel, einem von demselben Brenner beheizbaren Stirlingmotor, einem Generator sowie einer Wärmepumpe, **gekennzeichnet** durch die Kombination folgender Merkmale:

    a) Der Stirlingmotor ist als Freikolben-Stirlingmotor (4) ausgeführt;

    b) der Kühler (9) des Freikolben-Stirlingmotors (4) kann zumindest mit einem Brauchwasserbehälter (11) bzw. einer -leitung und/oder einem Luftkanal (18) wärmeübertragend verbunden werden (Wärmetauscher 15);

    c) der Generator ist als Lineargenerator (5) ausgeführt und antriebstechnisch direkt mit dem Freikolben-Stirlingmotor (4) gekoppelt;

    d) die Wärmepumpe (6) weist einen elektrischen Antriebsmotor (10) auf, welcher u.a. auf Netzbetrieb geschaltet werden kann;

    e) der Lineargenerator (5) kann über eine Regelung (7) mit dem Antriebsmotor (10) der Wärmepumpe (6), mit dem öffentlichen Stromnetz sowie - im Bedarfsfall - mit weiteren Verbrauchern elektrisch verbunden werden.

2. Heizungs- und Stromerzeugungsanlage nach Anspruch 1, **dadurch gekennzeichnet, daß** der Erhitzer (8) des Freikolben-Stirlingmotors (4) gegenüber den vom Brenner (3) erzeugten Heißgasen abgeschirmt werden kann (Klappe 16).

3. Heizungs- und Stromerzeugungsanlage nach Anspruch 1 oder 2, **dadurch gekennzeichnet, daß** der Kühler (9) des Freikolben-Stirlingmotors (4) mit einem Luftkanal (18) wärmeübertragend verbunden werden kann (Wärmetauscher 15), in welchem beispielsweise die Ansaugluft eines Brenners (3), Luft zur Beheizung eines Industriegebäudes, Luft für eine Biomasse-Trockenanlage oder für eine Absorptionskälteanlage erwärmt wird.

4. Heizungs- und Stromerzeugungsanlage nach einem oder mehreren der Ansprüche 1 bis 3, **dadurch gekennzeichnet, daß** der Lineargenerator (5) u.a. eine Notstromanlage elektrisch versorgen kann.

5. Heizungs- und Stromerzeugungsanlage nach einem oder mehreren der Ansprüche 1 bis 4, **dadurch gekennzeichnet, daß** das Wämeträgerfluid, welches bei eingeschalteter Wärmepumpe (6) die von dieser bereitgestellte Nutzwärme abtransportiert (Wärmetauscher 14), teilweise oder vollständig an der Wärmepumpe (6) vorbei durch den Heißgasbereich (Wärmetauscher 13) des Brenners (3) geleitet werden kann (Ventil 22).

FIG.1

EP 0 445 510 A2

FIG. 2